# EUROPÄISCHE PATENTSCHRIFT

(11) **EP 3 804 979 B1**
(45) Veröffentlichungstag und Bekanntmachung des Hinweises auf die Patenterteilung: **02.11.2022**
(21) Anmeldenummer: 20199228.6
(22) Anmeldetag: 30.09.2020
(51) Int. Cl.: B32B 3/30, B32B 5/02, B32B 5/26, B32B 27/08

(54) **VERFAHREN ZUM HERSTELLEN EINES NATURFASERVERSTÄRKTEN VERKLEIDUNGSBAUTEILS FÜR EIN KRAFTFAHRZEUG**
METHOD FOR PRODUCING A CLADDING COMPONENT FOR A MOTOR VEHICLE REINFORCED WITH NATURAL FIBRES
PROCÉDÉ DE FABRICATION D'UN COMPOSANT DE REVÊTEMENT RENFORCÉ PAR DES FIBRES NATURELLES POUR UN VÉHICULE AUTOMOBILE

(30) Priorität: 07.10.2019 DE 102019126825
(43) Veröffentlichungstag der Anmeldung: 14.04.2021
(73) Patentinhaber: Lisa Dräxlmaier GmbH, 84137 Vilsbiburg (DE)
(72) Erfinder: Clausner, Ivonne, 84028 Landshut (DE); Eggemann, Thomas, 84137 Vilsbiburg (DE); Ostner, Daniel, 84144 Geisenhausen (DE)

(56) Entgegenhaltungen:
- EP-A1- 0 958 131
- WO-A1-2015/090574
- DE-A1-102012 012 470
- DE-U1-202007 007 498

## Beschreibung

### Technisches Gebiet

Die vorliegende Erfindung betrifft ein Verfahren zum Herstellen eines naturfaserverstärkten Verkleidungsbauteils für ein Kraftfahrzeug.

### Stand der Technik

Im Fahrzeuginnenraum, insbesondere bei Verkleidungsbauteilen, ist in den letzten Jahren der Anteil von Naturfaserwerkstoffen wie Flachs, Hanf oder Holz stetig gestiegen. Durch ihren Einsatz lassen sich im Vergleich zu petrochemischem Kunststoff-Spritzguss zwischen 20 und 50 % Gewicht im Interieur einsparen und somit die Ökobilanz des Fahrzeugs verbessern. In der Vergangenheit waren Bio-Verbundstrukturen jedoch für die Insassen nicht sichtbar und wurden beispielsweise durch Folien aus Kunststoff oder Leder kaschiert. Die Naturfaserwerkstoffe als Designelement einzusetzen, das den ökologisch-nachhaltigen Charakter des Fahrzeugs unterstreicht, war oftmals noch keine Option.

Die üblicherweise wirr angeordnete Naturfaserstruktur konnte hinsichtlich eines hochwertigen Erscheinungsbilds den Ansprüchen der Automobilhersteller oftmals noch nicht gerecht werden. Es besteht also die Herausforderung, zum einen Naturfaserwerkstoffe als Designelement im Fahrzeuginnenraum zu verwenden und zum anderen weiteres Gewicht einzusparen, und zwar auf einem großserientauglichen Niveau.

Die DE 10 2012 012 470 A1 beschreibt ein Verfahren zum Herstellen eines Innenverkleidungsteils. Das Innenverkleidungsteil wird aus einem Trägerbauteil und einer Dekorfolie herstellt. In einem Presswerkzeug werden das Trägerbauteil und die Dekorfolie angeordnet und dann zu einem Zwischenprodukt verpresst. Dabei wird eine Oberflächenstruktur an der Dekorfolie erzeugt, unter anderem durch eine Rückfederung des Faserformstoffs des Trägerbauteils. Das Trägerbauteil wird hergestellt, indem ein Faserformstoff auf einer Auflagefläche aus einem textilen Flächengebilde angeordnet und dann zusammen mit diesem verdichtet wird. Der Faserformstoff kann eine Mischung aus Naturfasern und Kunststofffasern sein. Der Faserformstoff des Trägerbauteils trägt dazu bei, eine Oberflächenstruktur an der Dekorfolie herzustellen.

### Beschreibung der Erfindung

Es ist daher die Aufgabe der Erfindung, eine Lösung bereitzustellen, mittels welcher Naturfaserwerkstoffe großserientauglich bei Verkleidungsbauteilen eingesetzt werden können.

Diese Aufgabe wird durch ein Verfahren zum Herstellen eines naturfaserverstärkten Verkleidungsbauteils für ein Kraftfahrzeug mit den Merkmalen des Patentanspruchs 1 gelöst. Weitere mögliche Ausgestaltungen der Erfindung sind insbesondere in den abhängigen Ansprüchen angegeben.

Bei dem erfindungsgemäßen Verfahren zum Herstellen eines naturfaserverstärkten Verkleidungsbauteils für ein Kraftfahrzeug wird eine mit einem Kunststoff durchsetzte Naturfasermatte bereitgestellt. Der Kunststoff, mit dem die Naturfasermatte durchsetzt ist, kann insbesondere ein Thermoplast sein. Nach der Fertigstellung des naturfaserverstärkten Verkleidungsbauteils dient die mit dem Kunststoff durchsetzte Naturfasermatte als Trägerteil. Zudem wird ein Textil in Form eines flexiblen Flächengebildes bereitgestellt. Das Textil kann zu 100 Prozent aus Naturfasern bestehen, muss es aber nicht. Beispielsweise ist es auch möglich, dass das aus dem Textil gebildete flexible Flächengebilde zu 100 Prozent aus einem Kunststoff hergestellt ist. Es ist auch möglich, dass das Textil aus einer Mischung von Naturfasern und Kunststofffasern hergestellt ist. Das Textil und die Naturfasermatte können beispielsweise Naturfasern aus Kenaf, Hanf, Flachs, Kokos, Sisal und dergleichen oder auch Mischungen davon aufweisen. Des Weiteren wird bei dem erfindungsgemäßen Verfahren eine mehrlagige Folie bereitgestellt.

Die Naturfasermatte, das Textil und die Folie werden zu einem Bauteilverbund mittels einer ersten Presse und/oder mittels einer zweiten Presse verdichtet, wobei das Textil mit der als Trägerteil dienenden Naturfasermatte verbunden und an einer von der Naturfasermatte abgewandten Seite des Textils die Folie derart verbunden wird, dass sich an einer vom Textil abgewandten Sichtseite der Folie eine Oberflächenstruktur des Textils abzeichnet. Die Verdichtung zu dem Bauteilverbund erfolgt also derart, dass sich nach Fertigstellung des Bauteilverbunds die Oberflächenstruktur des Textils, beispielsweise in Form von Naturfasern und/oder Kunststofffasern, an der Sichtseite der Folie abzeichnet. Der Bauteilverbund wird mittels eines Werkzeugs in eine vorgegebene Form umgeformt und verdichtet, wobei dadurch das Verkleidungsbauteil ausgebildet wird. Mittels des Werkzeugs kann dabei auf der Sichtseite der Folie, welche einer Sichtseite des Verkleidungsbauteils entspricht, eine Oberflächenstruktur eingeprägt werden. Das Werkzeug weist dafür eine korrespondierende Oberflächenstruktur auf, sodass während des Umformvorgangs und Verdichtungsvorgangs des Bauteilverbunds auf der Sichtseite der Folie besagte Oberflächenstruktur eingeprägt wird.

Die Oberflächenstruktur kann beispielsweise einer holzartigen Oberflächenstruktur, einer naturfaserartigen Struktur oder dergleichen nachempfunden sein. Auch kann die Oberflächenstruktur zum Beispiel einer Oberflächenstruktur von einem garnbasierten Textil, beispielsweise in Form von vermaschten, verkreuzten oder gestreckten Fadensystemen, nachempfunden sein. Bei vermaschten Fadensystemen handelt es sich um Gewirke und Gestricke. Bei verkreuzten Fadensystemen handelt es sich um Gewebe und Geflechte. Bei gestreckten Fadensystemen handelt es sich um Gelege. Andere Oberflächenstrukturen sind auch möglich. Wird das so hergestellte Verkleidungsbauteil beispielsweise im Interieurbereich eines Kraftfahrzeugs verbaut, so können Fahrzeuginsassen mit ihren Händen über die Oberfläche des Verkleidungsbauteils streichen und erfahren eine Haptik, wie sie beispielsweise Naturstoffe aus Holz oder dergleichen haben können. Mittels des erfindungsgemäßen Verfahrens ist es möglich, ein naturfaserverstärktes Verkleidungsbauteil für ein Kraftfahrzeug großserientauglich herzustellen. Durch die als Trägerteil dienende Naturfasermatte ist es möglich, ein besonders geringes Gewicht bei dem Verkleidungsbauteil zu realisieren. Ebenso trägt das in Form des flexiblen Flächengebildes bereitgestellte und zu dem Verkleidungsbauteil verarbeitete Textil zur Gewichtsreduktion bei. Insbesondere wenn bei dem Flächengebilde wie bei der Naturfasermatte ebenfalls Naturfasern eingesetzt werden, kann ein besonders nachhaltiges Verkleidungsbauteil aus nachwachsenden Rohstoffen bereitgestellt werden.

Eine mögliche Ausgestaltung der Erfindung sieht vor, dass aus der Naturfasermatte und dem Textil ein Verbund in Form eines Organoblechs hergestellt wird. Das hergestellte Organoblech wird aufgeheizt, insbesondere 30 bis 40 Sekunden lang bei 190 bis 230 °C. Die Folie wird auf dem Textil des aufgeheizten Organoblechs angeordnet und gemeinsam mit diesem erwärmt und mittels der zweiten Presse zu dem Bauteilverbund verdichtet. Der Vorteil bei dieser Vorgehensweise besteht darin, dass die Naturfasermatte und das Textil in Form des Organoblechs hergestellt werden. Das so hergestellte Organoblech kann beispielsweise an einer ersten Produktionsstätte hergestellt und dort zwischengelagert werden. Das Organoblech kann dann zu einer weiteren Produktionsstätte transportiert werden, wo es dann gemeinsam mit der Folie zu dem besagten Bauteilverbund und letztlich zu dem Verkleidungsbauteil fertiggestellt wird.

Eine weitere mögliche Ausgestaltung der Erfindung sieht vor, dass vor dem Verbinden des Textils mit der Naturfasermatte diese durch Warmwalzen verdichtet wird, wonach das Textil teilweise in den durch das Warmwalzen teilweise noch geschmolzenen Kunststoff der Naturfasermatte eingedrückt wird, in Folge dessen sich der Kunststoff in Lücken des Textils drückt und im Textil verankert und dadurch das Textil unter Ausbildung des Organoblechs mit der Naturfasermatte verbunden wird. Der Erfindung liegt die Erkenntnis zugrunde, dass die Naturfasermatte und das Textil ein unterschiedliches Verhalten beim Verformen aufweisen können. Bei Geweben oder Gestricken sind fast alle Faseranteile gerichtet, wobei ein Vlies beispielsweise hinsichtlich der Anordnung der Fasern komplett wirr ist. Neben unterschiedlich möglichen Verzügen bei der Naturfasermatte und dem Textil kann auch das Erwärmungs- und/oder Schwindungsverhalten bei der Naturfasermatte und dem Textil unterschiedlich ausfallen. Dies kann begünstigt werden, wenn das Textil gar keine Kunststoffanteile im Gegensatz zur mit dem Kunststoff durchsetzten Naturfasermatte enthält. Um ein unterschiedliches Verhalten beim Zusammenbringen der Naturfasermatte und des Textils zu vermeiden, kann die Eigenspannung des Kunststoffs in der mit dem Kunststoff durchsetzten Naturfasermatte minimiert werden, indem die Naturfasermatte vorkonsolidiert wird. Die beispielsweise vernadelte und mit dem Kunststoff durchsetzte Naturfasermatte wird dafür durch Warmwalzen bei einer Temperatur über der Glasübergangstemperatur des betreffenden Kunststoffs vorverdichtet. Das Vorverdichten kann beispielsweise von einer ursprünglichen Dicke im Bereich von ca. 9 bis 13 Millimetern auf eine Dicke von ca. 2 bis 3 Millimetern erfolgen. Insbesondere kann das Vorverdichten bezogen auf die ursprüngliche Dicke auf eine verdichtete Dicke von 55 bis 85 Prozent erfolgen. Je nach Flächengrammatur (g/m²) in der Naturfasermatte am Anfang muss man quantitativ mehr oder weniger die Matte verdichten, um die gleiche Dichte am Ende zu erhalten. Durch das Vorkonsolidieren setzt ein Schrumpfen in der mit dem Kunststoff durchsetzten Naturfasermatte ein, sodass das Verzugs- und Schwindungsverhalten an das später aufzulegende Textil angepasst wird. Die Schwindung hängt unter anderem von der chemischen Zusammensetzung des Kunststoffs bei der mit dem Kunststoff durchsetzten Naturfasermatte ab. Bei einer Polypropylen-Faserherstellung werden die Fasern beim Abkühlen verstreckt, sodass sich die Molekülketten linearer zueinander ablegen. Diese Molekülketten sind meist über Van-der-Waals-Kräfte miteinander verbunden. Erwärmt man nun den Kunststoff in der mit dem Kunststoff durchsetzten Naturfasermatte wieder, kommt es zu einer nachträglichen Relaxation, bei der die Molekülketten einen energetisch günstigeren Zustand bei gleichem Volumen aber unterschiedlichen Maßen einnehmen wollen. Nach dem Warmwalzen der mit dem Kunststoff durchsetzten Naturfasermatte kann das Textil in den noch warmen und somit verformbaren und gegebenenfalls noch angeschmolzenen Kunststoff gedrückt werden. Das Textil kann beispielsweise 0,2 bis 0,3 Millimeter in den nachgiebigen Kunststoff der mit dem Kunststoff durchsetzten und vorkonsolidierten Naturfasermatte eingedrückt beziehungsweise angeheftet werden. Eine Verbindung zwischen der mit dem Kunststoff durchsetzten und vorkonsolidierten Naturfasermatte und dem Textil wird über einen leichten Formschluss erreicht, indem sich eine Kunststoffschicht der mit dem Kunststoff durchsetzten und vorkonsolidierten Naturfasermatte in kleine Lücken des aus dem Textil gebildeten flexiblen Flächengebildes drückt und sich verankert. Der so hergestellte Verbund kann beispielsweise über Kaltwalzen abgekühlt werden. Durch das unmittelbare Anordnen des Textils auf der vorkonsolidierten und mit dem Kunststoff durchsetzten Naturfasermatte und dem anschließenden Abkühlen kann ein Halbzeug erzeugt werden, das nicht am Produktionsort des Verkleidungsbauteils gefertigt werden muss, da durch das unmittelbare Aufbringen des Textils ein Transport des so gebildeten Halbzeugs möglich ist.

Gemäß einer weiteren möglichen Ausgestaltung der Erfindung ist es vorgesehen, dass das Textil bezogen auf seine Dicke maximal zu 70 Prozent, insbesondere maximal zu 30 bis 50 Prozent in den noch geschmolzenen Kunststoff der Naturfasermatte eingedrückt wird. Dadurch kann sichergestellt werden, dass sich im späteren Herstellverfahrensverlauf die Oberflächenstruktur noch in ausreichendem Maße an der Sichtseite der Folie abzeichnen kann. Denn wie beschrieben wird das Textil nicht vollständig in den noch geschmolzenen Kunststoff der vorkonsolidierten Naturfasermatte eingedrückt.

Gemäß einer weiteren möglichen Ausgestaltung der Erfindung ist es vorgesehen, dass vor dem Eindrücken des Textils zwischen diesem und der Naturfasermatte ein Haftvermittler angeordnet wird. Bei dem Haftvermittler kann es sich beispielsweise um ein Haftvlies, zum Beispiel in Form einer zweischichtigen Folie, oder auch um einen anderweitigen Haftvermittler handeln. Dadurch kann eine besonders stabile Verbindung zwischen dem Textil und dem Kunststoff der mit dem Kunststoff durchsetzten Naturfasermatte erzielt werden.

Eine weitere mögliche Ausgestaltung der Erfindung sieht vor, dass das Organoblech mittels eines Greifersystems geklemmt wird. Dies kann dem Risiko vorbeugen, dass es zur Ablösung des Textils von der vorkonsolidierten und mit dem Kunststoff durchsetzten Naturfasermatte kommt. Daher kann es vorgesehen sein, dass der aus der Naturfasermatte und dem Textil hergestellte Verbund dauerhaft mittels des besagten Greifersystems geklemmt beziehungsweise fixiert wird. Eventuelle lokale Ablösungen des Textils bleiben dann ohne Auswirkungen auf das Endergebnis des herzustellenden Verkleidungsbauteils, wenn der Verbund dauerhaft mittels des Greifersystems geklemmt bleibt.

Eine alternative mögliche Ausgestaltung des Verfahrens sieht vor, dass das Textil auf der Naturfasermatte angeordnet und gemeinsam mit dieser aufgeheizt und mittels der ersten Presse zu einem Verbund verdichtet wird. Danach wird die Folie auf dem Textil des Verbunds angeordnet und gemeinsam mit diesem aufgeheizt und mittels der zweiten Presse zu dem Bauteilverbund verdichtet. Bei dieser Verfahrensvariante wird der Verbund aus dem Textil und der Naturfasermatte also an dem Produktionsort des herzustellenden Verkleidungsbauteils hergestellt und direkt weiterverarbeitet, indem die Folie auf dem so hergestellten Verbund angeordnet und gemeinsam mit diesem aufgeheizt sowie mit dieser mittels der zweiten Presse zu dem Bauteilverbund verdichtet wird. Die Prozessparameter insbesondere bei der ersten Presse sind dabei so einzustellen, dass das Textil nicht zu stark in den Kunststoff der Naturfasermatte hineingedrückt wird, sodass sichergestellt werden kann, dass beim Bauteilverbund sich noch die Oberflächenstruktur des Textils an der Sichtseite der Folie abzeichnet. Bei dieser Vorgehensweise kann also an einer einzigen Produktionsstätte das gesamte Verkleidungsbauteil aus den besagten Komponenten beziehungsweise Elementen hergestellt werden.

Eine weitere mögliche Ausgestaltung des Verfahrens sieht vor, dass vor dem Herstellen des Verbunds das Textil mit der Naturfasermatte vernäht und/oder verklebt wird. Dadurch kann sichergestellt werden, dass das Textil dauerhaft und zuverlässig mit der Naturfasermatte verbunden bleibt, ohne dass es zu Ablösungen des Textils kommt.

Eine weitere mögliche Alternative des Verfahrens sieht vor, dass vor dem Anordnen des Textils auf der Naturfasermatte diese allein aufgeheizt und mittels der ersten Presse verdichtet wird, wonach das Textil in den noch zumindest teilweise geschmolzenen Kunststoff der verdichteten Naturfasermatte unter Ausbildung eines Verbunds gedrückt wird, wonach die Folie auf dem Textil des Verbunds angeordnet und gemeinsam mit diesem aufgeheizt und mittels der zweiten Presse zu dem Bauteilverbund verdichtet wird. Bei dieser Verfahrensvariante ist es also vorgesehen, die mit dem Kunststoff durchsetzte Naturfasermatte allein aufzuheizen und mittels der ersten Presse zu verdichten. Bevor die so verdichtete Naturfasermatte zur Herstellung des Bauteilverbunds der zweiten Presse zugeführt wird, wird das Textil in den noch zumindest teilweise geschmolzenen Kunststoff der verdichteten Naturfasermatte unter Ausbildung des Verbunds gedrückt. Ein Vorteil bei dieser Vorgehensweise besteht insbesondere darin, dass das Textil nicht zu tief in den noch zumindest teilweise geschmolzenen Kunststoff der verdichteten Naturfasermatte unter Ausbildung des Verbunds gedrückt wird. Denn das Verdichten beziehungsweise Verpressen der Naturfasermatte erfolgt noch bevor das Textil auf der Naturfasermatte angeordnet wird mittels der ersten Presse. So ist es auf besonders einfache und zuverlässige Weise möglich, nach der Entnahme der verdichteten Naturfasermatte aus der ersten Presse das Textil nur so tief in den noch zumindest teilweise geschmolzenen Kunststoff der verdichteten Naturfasermatte unter Ausbildung des Verbunds zu drücken, dass das Textil nicht vollständig in den zumindest noch teilweise geschmolzenen Kunststoff der verdichteten Naturfasermatte eindringt.

Eine weitere mögliche Alternative des Verfahrens sieht vor, dass die Naturfasermatte alleine aufgeheizt und mittels der ersten Presse verdichtet wird, wonach das Textil und die Folie zu einem miteinander verbundenen Halbzeug verbunden werden, welches auf der verdichteten Naturfasermatte angeordnet und gemeinsam mit dieser aufgeheizt und mittels der zweiten Presse zu dem Bauteilverbund verdichtet wird. Bei dieser Verfahrensalternative ist es also vorgesehen, das Textil und die Folie zunächst miteinander zu dem besagten Halbzeug miteinander zu verbinden. Die mit dem Kunststoff durchsetzte Naturfasermatte wird allein aufgeheizt und mittels der ersten Presse verdichtet. Auf diese Weise lässt sich das Halbzeug, welches das Textil und die Folie umfasst, besonders einfach handhaben. Zudem kann so sichergestellt werden, dass wiederum das Textil nicht in unerwünschtem Maße zu tief in den angeschmolzenen Kunststoff der verdichteten Naturfasermatte eindringt.

Eine weitere mögliche Ausgestaltung des Verfahrens sieht vor, dass die erste Presse mehrere über jeweilige Stellmittel verstellbare Werkzeugsegmente aufweist, mittels welchen beim Verdichten Bereiche unterschiedlicher Faserdichte bei der Naturfasermatte durch Anfahren unterschiedlicher Pressstellungen durch die Werkzeugsegmente ausgeglichen werden. Beispielsweise können die verstellbaren Werkzeugsegmente über Stellmittel in Form von Druckzylindern einzeln angesteuert und verfahren werden. Die eingesetzten Stellmittel können beispielsweise über Sensoren miteinander kommunizieren, sodass die erste Presse über ihre separat verstellbaren Werkzeugsegmente unterschiedliche Pressstellungen anfahren kann, sodass unterschiedliche Dicken beziehungsweise Dichten der Naturfasermatte ausgeglichen werden können. Mittels der ersten Presse kann es beispielsweise vorgesehen sein, die mit dem Kunststoff durchsetzte Naturfasermatte auf einen Werkzeugspalt zwischen 2 und 4 Millimetern zu verdichten. Je nach herzustellendem Verkleidungsbauteil können natürlich auch andere Dicken realisiert werden. Durch die über jeweilige Stellmittel verstellbaren Werkzeugsegmente ist es also möglich, beim Verdichten Bereiche unterschiedlicher Faserdichten bei der Naturfasermatte auszugleichen.

Gemäß einer weiteren möglichen Ausgestaltung des Verfahrens ist es vorgesehen, dass das Verdichten mittels der ersten Presse gemäß einer vorgegebenen Kraftrampe zwischen 2 und 0,3 Tonnen pro Sekunde, insbesondere mit 0,5 Tonnen pro Sekunde, erfolgt. Unter der Kraftrampe ist ein geregelter Kraftaufbau zu verstehen, welcher insbesondere über die gesamte Fläche der zu verdichtenden und mit dem Kunststoff versetzten Naturfasermatte aufgebracht wird. Dieser geregelte Kraftaufbau mittels der ersten Presse bringt den Vorteil mit sich, dass das Material beziehungsweise der Verbund nicht gestresst wird, sodass eventuell negative Einflüsse auf die Oberfläche in Form von Inhomogenitäten oder beispielsweise Kunststoff-Flecken oder Kunststoffanhäufungen vermieden werden können. Durch besagte Kraftrampe wird eine langsame Verpressung ermöglicht, sodass eventuell in der Naturfasermatte gebundenes Wasser frei werden und gasförmig entweichen kann. Durch eine langsame Verdichtung der Naturfasermatte kann auch das Wasser am innersten Punkt der Naturfasermatte entweichen und verbleibt nicht als Kondensat im fertigen Bauteil. Denn würde Wasser im Inneren verbleiben, könnte dies dazu führen, dass es später ausgast und es zur Blasen- oder Schlierenbildung kommt. Ein weiterer Effekt der Kraftrampe begünstigt die Kapillarwirkung. Würde zu viel Druck während des Aufheizens aufgebracht werden, so würde der flüssiggewordene beziehungsweise geschmolzene Kunststoff beispielsweise an eine heiße Kontaktheizplatte gezogen werden, sodass an einer Grenzschicht ein erhöhter Anteil an Kunststoff entstehen würde, der sich in Form eines Durchschlags in Form von Flecken an der Oberfläche des fertigen Bauteils zeigen könnte. Wird hingegen mit einem geringeren Druck über eine längere Zeit der Verbund erwärmt, legt sich der Kunststoff besser um die Naturfasern und kann diese formschlüssig vollständig umschließen.

Eine weitere mögliche Ausgestaltung des Verfahrens sieht vor, dass vor dem Verdichten der Naturfasermatte diese mittels der ersten Presse 40 bis 90 Sekunden lang bei 190 bis 230 °C aufgeheizt wird. Mit anderen Worten kann es sich bei der ersten Presse also um eine Kontaktheizpresse handeln. Das Aufheizen und Verdichten der mit dem Kunststoff durchsetzten Naturfasermatte kann also in einem Arbeitsschritt mittels der ersten Presse erfolgen. Bei diesen Temperaturen und der Dauer der Temperaturaufbringung kann ein besonders gutes Ergebnis beim Verdichten der mit dem Kunststoff durchsetzten Naturfasermatte erzielt werden. So kann der Kunststoff innerhalb der Naturfasermatte über die gesamte Dicke der Naturfasermatte aufgeschmolzen werden, sodass das Verdichten der mit dem Kunststoff durchsetzten Naturfasermatte besonders homogen erfolgen kann.

Eine weitere mögliche Ausgestaltung des Verfahrens sieht vor, dass der Verbund gemeinsam mit der an diesem angeordneten Folie mittels der zweiten Presse aufgeheizt und zu dem Bauteilverbund verdichtet wird. Dabei kann es vorgesehen sein, dass der Verbund gemeinsam mit der an diesem angeordneten Folie 20 bis 35 Sekunden lang bei 200 bis 220 °C aufgeheizt wird, insbesondere vor dem Verdichten zu dem Bauteilverbund mittels der zweiten Presse. Je länger die Folie aufgeheizt wird, desto eher wird eine homogene Oberfläche erzeugt. Bei der zweiten Presse kann es sich also ebenfalls um eine Kontaktheizpresse handeln, mittels welcher der Verbund gemeinsam mit der an diesem angeordneten Folie zu dem Bauteilverbund aufgeheizt und verdichtet wird. Je länger die Folie aufgeheizt wird, desto tiefer dringt sie in den Bauteilverbund ein und desto prägnanter wird die Oberflächenstruktur. Die Kunststofffolie wird warm, wird teilweise flüssig und fließt so schwerkraftbedingt und durch dem eingebrachten Druck nach unten. Es ist somit nur noch wenig Material von der Kunststofffolie an der Oberfläche, so dass die Oberflächenstruktur prägnant/homogen erscheint.

Eine weitere mögliche Ausgestaltung des Verfahrens sieht vor, dass das Verdichten zum Bauteilverbund mittels der zweiten Presse gemäß einer vorgegebenen Kraftrampe, insbesondere mit 25 Tonnen pro Sekunde, erfolgt. Es erfolgt also eine Art Laminiervorgang zum Aufbringen der Folie, wobei die besagte Kraftrampe mit vorzugsweise 25 Tonnen pro Sekunde gefahren wird. Dadurch wird die Folie auf das Textil und in die Freiräume des Textils bis zum Übergang der Naturfasermatte gedrückt. In Folge dessen wird die Folie zuverlässig insbesondere mit dem Textil verbunden.

Eine weitere mögliche Ausgestaltung des Verfahrens sieht vor, dass die beiden Pressen beim Verdichten so weit geschlossen werden, dass ein nach dem Verdichten verbleibender Spalt zwischen jeweiligen Werkzeughälften bei der ersten Presse 1,3 bis 2 mal größer als ein nach dem Verdichten verbleibender Spalt zwischen jeweiligen Werkzeughälften bei der zweiten Presse ist. Das Spaltmaß der ersten Presse ist also größer als bei der zweiten Presse, welche insbesondere als Laminierpresse zum Aufbringen der Folie dienen kann. Wäre der Unterschied hinsichtlich der Spaltmaße bei den beiden Pressen zu groß, dann könnte dies dazu führen, dass die Folie zu weit einsinkt und das fertiggestellte Bauteil heller aussieht als gewünscht. Wäre der Unterschied hinsichtlich der Ausgangsdicke der Naturfasermatte zum Spaltmaß der ersten Presse zu groß, dann könnte dies dazu führen, dass in der zweiten Presse, die Folie zu weit einsinkt. Wenn noch viele Hohlräume nach dem ersten Verpressen da sind, besteht für die Folie eine sehr gute Möglichkeit abzusacken und in diese Hohlräume zu fließen. Wird hingegen am Anfang die Naturfasermatte zu stark verdichtet, dann kann die Kunststofffolie in diese nicht mehr hinfließen. Das ist der Zwiespalt, den es zu lösen gilt: Es wird so gering verdichtet, dass die Oberflächenstruktur erhalten bleibt und die Kunststofffolie sich mit der Naturfasermatte verbindet. Zudem wird so hoch verdichtet, dass vom Material der Kunststofffolie auch noch oben bzw. außen genügend übrigbleibt. Ist der Unterschied hinsichtlich der Spaltmaße der Pressen zu gering, kann dies dazu führen, dass die Folie überwiegend an der Oberfläche verbleibt und nicht tief genug in das Textil beziehungsweise die Naturfasermatte eindringt und infolgedessen ein unzureichender Bauteilverbund entstehen kann. Die mit dem Kunststoff durchsetzte Naturfasermatte darf also nicht zu sehr verdichtet werden, da sonst die Folie nicht eindringen könnte. Allerdings darf die mit dem Kunststoff durchsetzte Naturfasermatte auch nicht zu wenig verdichtet werden, da ansonsten die Gefahr bestünde, dass die Folie zu tief einsinkt.

Eine weitere mögliche Ausgestaltung des Verfahrens sieht vor, dass bei der Herstellung des Bauteilverbunds dieser auf eine Dicke verdichtet wird, welche größer als eine Zieldicke des Verkleidungsbauteils ist. Denn erst beim Umformen und Verdichten des Bauteilverbunds mittels des Werkzeugs in die vorgegebene Form unter Ausbildung des Verkleidungsbauteils wird eine komplette Ausformung gemäß einer Wunschgeometrie erzeugt. Beispielsweise ist es möglich, dass bei der Herstellung des Bauteilverbunds dieser auf eine Dicke verdichtet wird, welche ca. 0,2 bis 0,5 Millimeter dicker als die Zieldicke des Verkleidungsbauteils ist. Je nach Geometrie des Verkleidungsbauteils ist es natürlich auch möglich, den Bauteilverbund auf eine andere Dicke einzustellen, solange diese nur größer als die Zieldicke des Verkleidungsbauteils ist. Der Bauteilverbund kann auf eine Dicke verdichtet werden, der 9 bis 20 Prozent dicker als die Zieldicke des Verkleidungsbauteils ist.

Gemäß einer weiteren möglichen Ausgestaltung der Erfindung ist es vorgesehen, dass die Naturfasermatte beim Herstellen des Verkleidungsbauteils auf eine Dichte von 0,7 bis 1 g/m³ verdichtet wird. Die gewünschte Zielhaptik beim Verkleidungsbauteil wird durch die Dichte der Naturfasermatte beeinflusst. Je höher die letztlich erzielte Dichte beim Verpressen ist, desto weniger Haptik bleibt erhalten. Aus diesem Grund ist es wichtig, eine Dichte von 0,7 bis 1 g/m³ zu erzielen.

Gemäß einer weiteren möglichen Ausgestaltung der Erfindung ist es vorgesehen, dass das zum Umformen und Verdichten des Bauteilverbunds verwendete Werkzeug wenigstens teilweise aus einem Material hergestellt wird, welches ab einer vorgegebenen Dichte des Bauteilverbunds nachgiebiger als der Bauteilverbund ist. Das als Prägepartner dienende Werkzeug kann also beispielsweise aus einem weicheren Material als Stahl hergestellt sein, zum Beispiel aus Silikon. Durch eine entsprechend weiche Ausgestaltung des Werkzeugs kann eine stärkere Ausprägung von Höhenunterschieden bei dem Verkleidungsbauteil erzielt werden. Dies kann dazu führen, dass nicht mehr dickenabhängig sondern dichteabhängig verpresst wird, wenn der Bauteilverbund mittels des Werkzeugs zu dem Verkleidungsbauteil umgeformt und verdichtet wird. Insbesondere an engen Radien des Verkleidungsbauteils kann es vorteilhaft sein, wenn das Werkzeug zumindest teilweise aus einem Material hergestellt ist, welches ab einer vorgegebenen Dichte des Bauteilverbunds nachgiebiger als der Bauteilverbund ist. So können auch besonders enge Radien, ohne diese beim Bauteilverbund zu stark zu verpressen, realisiert werden.

In weiterer möglicher Ausgestaltung der Erfindung ist es vorgesehen, dass beim zum Umformen und Verdichten des Bauteilverbunds verwendeten Werkzeug eine Werkzeugoberflächenstruktur durch Sandstrahlen oder Ätzen und/oder anschließendem Oberflächenhärten hergestellt wird, welche der einzubringenden Oberflächenstruktur des Verkleidungsbauteils entspricht. Die Oberfläche des Werkzeugs, welches als Prägepartner dient, wird auf die Bauteiloberfläche übertragen. Das heißt beispielsweise, dass bei einer raueren Werkzeugoberfläche ein entsprechender Glanzgrad eingestellt werden kann. Insbesondere kann es vorgesehen sein, eine besonders verschleißfeste Werkzeugoberflächenstruktur zu realisieren, sodass das Werkzeug für die Herstellung von besonders vielen Verkleidungsbauteilen verwendet werden kann, ohne dass sich die Werkzeugoberflächenstruktur verändert.

Eine weitere mögliche Ausgestaltung des Verfahrens sieht vor, dass das Werkzeug, mittels welchem der Bauteilverbund zum Verkleidungsbauteil umgeformt und verdichtet wird, auf eine Temperatur zwischen 20 und 80 °C temperiert wird. Bei dieser Temperatur kann der Bauteilverbund besonders gut zum Verkleidungsbauteil umgeformt und verdichtet werden. Insbesondere werden die Kunststoffbestandteile der Folie und in der Naturfasermatte und/oder im Textil bei dieser Temperatur nicht mehr aufgeschmolzen. Gleichzeitig ist es in diesem Temperaturbereich dennoch gut möglich, den Bauteilverbund zum Verkleidungsbauteil umzuformen, zu verdichten und kontrolliert abzukühlen.

Weitere mögliche Vorteile, Merkmale und Einzelheiten der Erfindung ergeben sich aus der nachfolgenden Beschreibung möglicher Ausführungsbeispiele sowie anhand der Zeichnung. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

### Kurze Figurenbeschreibung

Die Zeichnung zeigt in:
- Fig. 1: eine schematische Querschnittsansicht eines naturfaserverstärkten Verkleidungsbauteils für ein Kraftfahrzeug;
- Fig. 2: einen schematisch dargestellten Warmwalzvorgang einer mit einem Kunststoff durchsetzten Naturfasermatte, welche nach dem Herstellen des Verkleidungsbauteils ein Bestandteil des Verkleidungsbauteils ist;
- Fig. 3: eine schematische Darstellung von Verfahrensschritten zum Herstellen des naturfaserverstärkten Verkleidungsbauteils gemäß einer ersten Verfahrensvariante;
- Fig. 4: eine schematische Darstellung von Verfahrensschritten zum Herstellen des naturfaserverstärkten Verkleidungsbauteils gemäß einer zweiten Verfahrensvariante;
- Fig. 5: eine schematische Darstellung von Verfahrensschritten zum Herstellen des naturfaserverstärkten Verkleidungsbauteils gemäß einer dritten Verfahrensvariante;
- Fig. 6: eine schematische Darstellung von Verfahrensschritten zum Herstellen des naturfaserverstärkten Verkleidungsbauteils gemäß einer vierten Verfahrensvariante;
- Fig. 7: ein Diagramm, in dem jeweilige Spalte von Presswerkzeugen dargestellt sind, mittels welchen das naturfaserverstärkte Verkleidungsbauteil gemäß der zweiten bis vierten Verfahrensvariante hergestellt wird.

In den Figuren sind gleiche oder funktionsgleiche Elemente mit den gleichen Bezugszeichen versehen worden.

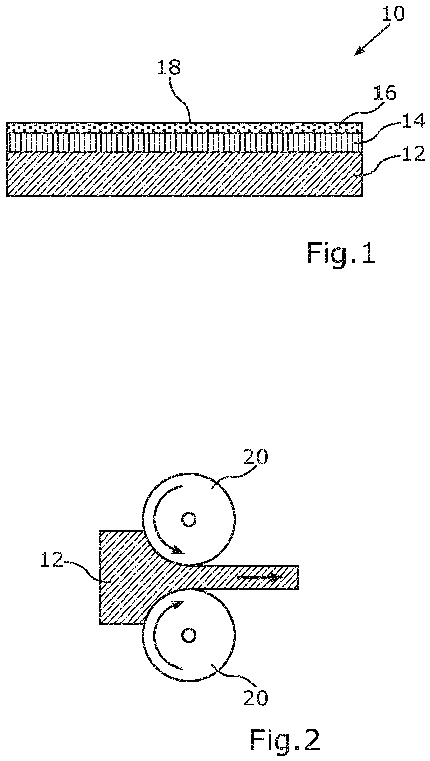

Ein naturfaserverstärktes Verkleidungsbauteil 10 für ein Kraftfahrzeug ist in einer schematischen Querschnittsansicht in Fig. 1 gezeigt. Das naturfaserverstärkte Verkleidungsbauteil 10 umfasst eine mit einem Kunststoff durchsetzte Naturfasermatte 12, ein damit verbundenes Textil 14 in Form eines flexiblen Flächengebildes und eine mehrlagige Folie 16. Die Naturfasermatte 12 bildet im fertighergestellten naturfaserverstärkten Verkleidungsbauteil 10 ein Trägerteil, auf welchem das Textil 14 angebracht ist. Die Naturfasermatte 12 kann aus verschiedensten Naturfasern oder Mischungen davon hergestellt sein, beispielsweise aus Flachsfasern, Hanffasern, Kokosfasern und dergleichen. Die Naturfasermatte 12 kann insbesondere von einem Thermoplast durchsetzt sein. Bei der Herstellung des naturfaserverstärkten Verkleidungsbauteils 10 wird der Kunststoff, der die Naturfasermatte 12 durchsetzt, aufgeschmolzen und härtet dann wiederum aus. Das Textil 14 kann aus Kunststofffasern und/oder Naturfasern hergestellt sein. Bei den Naturfasern kann es sich beispielsweise um Flachsfasern, Hanffasern, Kokosfasern, Sisal und dergleichen handeln. Das Textil 14 ist im fertighergestellten Verkleidungsbauteil 10 teilweise in den Kunststoff der Naturfasermatte 12 eingedrungen und dadurch mit diesem verankert.

Bei der mehrlagigen Folie 16 kann es sich um eine Kunststofffolie aus mehreren Schichten handeln. Eine unterste Schicht der Folie 16 stellt einen Verbund zum Kunststoff, welcher die Naturfasermatte 12 durchsetzt, her. Diese unterste Schicht kann aus dem gleichen Kunststoff hergestellt sein, wie der Kunststoff, der die Naturfasermatte 12 durchsetzt. Diese unterste Schicht der Folie 16 trägt dazu bei, das Textil 14 fest mit der Naturfasermatte 12, insbesondere mit dem Kunststoff, der die Naturfasermatte 12 durchsetzt, zu verbinden. Die Folie 16 kann des Weiteren eine mittlere Schicht aufweisen, welche Farbpigmente, UV-Stabilisatoren, eine Barriereschicht aus höherschmelzenden Anteilen, Additive und dergleichen aufweisen kann. Eine obere Schicht der Folie 16 bildet eine Dekorschicht und ist so gestaltet, dass sie Umwelteinflüssen standhält. Diese kann aus Thermoplasten oder Duroplasten bestehen. Beispielsweise kann die obere Schicht als Polyurethan-Beschichtung ausgeführt sein, welche ein mattes und somit hochwertiges Erscheinungsbild aufweist.

Zur Herstellung des naturfaserverstärkten Verkleidungsbauteils 10 werden die mit dem Kunststoff durchsetzte Naturfasermatte 12, das Textil 14 und die Folie 16 mittels einer ersten Presse und/oder mittels einer zweiten Presse zu einem hier nicht dargestellten Bauteilverbund verdichtet. Das Textil 14 wird dabei mit der als Trägerteil dienenden Naturfasermatte 12 verbunden und an einer von der Naturfasermatte 12 abgewandten Seite des Textils 14 wird die Folie 16 derart verbunden, dass sich an einer vom Textil 14 abgewandten Sichtseite 18 der Folie 16 eine Oberflächenstruktur des Textils 14 abzeichnet. Danach wird der so hergestellte Bauteilverbund mittels eines Werkzeugs in eine vorgegebene Form umgeformt und verdichtet, wodurch das Verkleidungsbauteil 10 hergestellt wird. Mittels des Werkzeugs kann auf der Sichtseite 18 der Folie 16, welche einer Sichtseite des Verkleidungsbauteils 10 entspricht, eine Oberflächenstruktur eingeprägt werden. Nachfolgend werden verschiedene Möglichkeiten beschrieben, wie das Verkleidungsbauteil 10 hergestellt werden kann.

In Fig. 2 ist schematisch ein Warmwalzvorgang der mit dem Kunststoff durchsetzten Naturfasermatte 12 dargestellt. Mittels jeweiliger Walzen 20 kann die mit dem Kunststoff durchsetzte Naturfasermatte 12 warmgewalzt und somit verdichtet werden. Dies trägt dazu bei, ein unterschiedliches Verhalten beim Zusammenbringen der mit dem Kunststoff durchsetzten Naturfasermatte 12 und dem Textil 14 zu vermeiden. Durch den Warmwalzvorgang wird die Eigenspannung des Kunststoffs, der die Naturfasermatte 12 durchsetzt, verringert, indem die Naturfasermatte 12 vorkonsolidiert wird, sodass ein Organoblech entsteht.

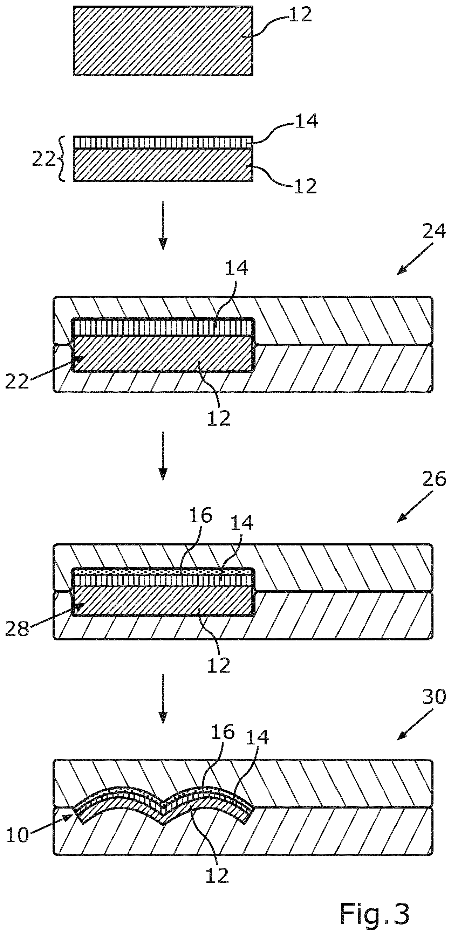

In Fig. 3 ist schematisch eine erste Verfahrensvariante zum Herstellen des naturfaserverstärkten Verkleidungsbauteils 10 gezeigt. Zunächst wird die mit dem Kunststoff durchsetzte Naturfasermatte 12 bereitgestellt. Diese wird, wie in Fig. 2 schematisch dargestellt, zunächst vorkonsolidiert, indem die mit dem Kunststoff durchsetzte Naturfasermatte 12 warmgewalzt wird. Vor dem Verbinden mit dem Textil 14 wird die mit dem Kunststoff durchsetzte Naturfasermatte 12 also durch Warmwalzen verdichtet, wonach erst das Textil 14 teilweise in den durch das warmwalzen zumindest teilweise noch geschmolzenen Kunststoff der Naturfasermatte 12 eingedrückt wird. In Folge dessen drückt sich der aufgeschmolzene Kunststoff, welcher die Naturfasermatte 12 durchsetzt, in Lücken des Textils 14 und verankert sich in dem Textil 14. Aus der Naturfasermatte 12 und dem Textil 14 wird somit ein Verbund 22 in Form eines Organoblechs hergestellt.

Das Textil 14 wird bezogen auf seine Dicke maximal zu 70 Prozent, insbesondere maximal zu 30 bis 50 Prozent, in den noch geschmolzenen Kunststoff, welcher die Naturfasermatte 12 durchsetzt, eingedrückt. Dies kann auch für die nachfolgend noch beschriebenen anderen Verfahrensvarianten gelten. Vor dem Eindrücken des Textils 14 kann zwischen diesem und der Naturfasermatte 12 noch ein Haftvermittler angeordnet werden. Bei dem Haftvermittler kann es sich beispielsweise um ein Haftvlies, eine zweischichtige Folie oder dergleichen handeln, welche das Verbinden des Textils 14 mit dem Kunststoff, der die Naturfasermatte 12 durchsetzt, begünstigt. Dies kann auch für die nachfolgend noch beschriebenen anderen Verfahrensvarianten gelten. Die Herstellung des als Organoblechs ausgebildeten Verbunds 22 kann dabei an einer Produktionsstätte erfolgen, die nicht der Produktionsstätte entsprechen muss, in der letztlich das naturfaserverstärkte Verkleidungsbauteil 10 hergestellt wird.

In der eigentlichen Produktionsstätte, in der das naturfaserverstärkte Verkleidungsbauteil 10 hergestellt wird, kann eine Kontaktheizung 24 vorgesehen sein. Der als Organoblech ausgebildete Verbund 22 kann in diese Kontaktheizung 24 eingelegt werden. Danach wird der Verbund 22 mittels der Kontaktheizung 24 aufgeheizt. Der Aufheizvorgang kann beispielsweise 30 bis 40 Sekunden dauern und bei einer Temperatur von 190 bis 230 °C erfolgen. Der Kunststoff, der die Naturfasermatte 12 durchsetzt, wird dadurch aufgeschmolzen oder zumindest so weit erhitzt, dass dieser fließfähig beziehungsweise verformbar ist. Nach dem Aufheizvorgang in der Kontaktheizung 24 wird der nun erhitzte Verbund 22 aus der Kontaktheizung 24 entnommen und in eine Presse 26 gelegt. Bei den anderen noch nachfolgend beschriebenen Verfahrensvarianten wird die Presse 26 als zweite Presse 26 bezeichnet, da noch eine andere erste Presse zum Einsatz kommt.

Die Folie 16 wird auf dem Textil 14 des noch aufgeheizten Verbunds 22, also des Organoblechs, angeordnet und dann wird die Presse 26 geschlossen. Bei der Presse 26 kann es sich um eine Kontaktheizpresse handeln. Bei geschlossener Presse 26 wird die Folie 16 gemeinsam mit dem Textil 14 und der mit dem Kunststoff durchsetzten Naturfasermatte 12 erhitzt und verpresst. Die Folie 16, das Textil 14 und die mit dem Kunststoff durchsetzte Naturfasermatte 12 werden dadurch mittels der Presse 26 zu einem Bauteilverbund 28 verdichtet. Bei der Herstellung des Bauteilverbunds 28 wird dieser auf eine Dicke verdichtet, welche größer als eine Zieldicke des Verkleidungsbauteils 10 ist.

Anschließend wird der so hergestellte Bauteilverbund 28 aus der Presse 26 entnommen und in ein Werkzeug 30 eingelegt. Mittels des Werkzeugs 30 wird der Bauteilverbund 28 in eine vorgegebene Form umgeformt und verdichtet, wodurch das Verkleidungsbauteil 10 hergestellt wird. Wie bereits erwähnt, wird mittels des Werkzeugs 30 dabei auf der hier nicht näher gekennzeichneten Sichtseite 18 der Folie 16 eine Oberflächenstruktur eingeprägt. Das zum Umformen und Verdichten des Bauteilverbunds 28 verwendete Werkzeug 30 kann eine Werkzeugoberflächenstruktur aufweisen, die durch Sandstrahlen oder Ätzen und/oder anschließendem Oberflächenhärten hergestellt wurde, wobei die Werkzeugoberflächenstruktur der einzuprägenden Oberflächenstruktur des Verkleidungsbauteils 10 entspricht.

Das Werkzeug 30 kann dabei aus einem Material hergestellt sein, welches ab einer vorgegebenen Dichte des Bauteilverbunds 28 nachgiebiger als der Bauteilverbund 28 ist. Dadurch ist es möglich, auch stärkere Ausprägungen von Höhenunterschieden insbesondere in der Folie 16 zu erzeugen. Das Werkzeug 30, mittels welchem der Bauteilverbund 28 zum Verkleidungsbauteil 10 umgeformt wird, kann dabei auf eine Temperatur zwischen 20 und 80 °C temperiert werden. Die Naturfasermatte 12 wird beim Herstellen des Verkleidungsbauteils 10 vorzugsweise auf eine Dichte von 0,7 bis 1 g/m³ verdichtet. Dadurch kann eine gewünschte Haptik an der Sichtseite 18 der Folie 16 erzielt werden. Dies kann auch für die nachfolgend noch beschriebenen anderen Verfahrensvarianten gelten.

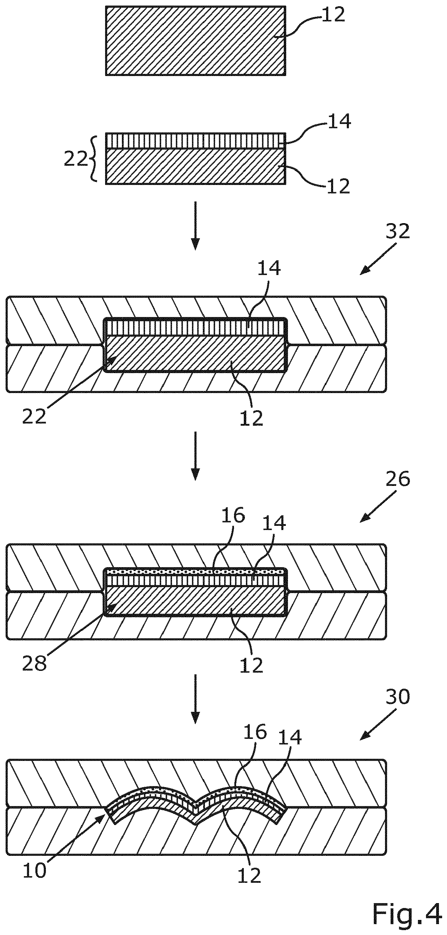

In Fig. 4 ist eine zweite mögliche Verfahrensvariante zum Herstellen des naturfaserverstärkten Verkleidungsbauteils 10 schematisch dargestellt. Die Vorgehensweise unterscheidet sich von der ersten Verfahrensvariante dadurch, dass der Verbund 22 aus dem Textil 14 und der Naturfasermatte 12 nicht in einer anderen Produktionsstätte als der Produktionsstätte, in der das Verkleidungsbauteil 10 hergestellt wird, in Form eines Organoblechs hergestellt wird. Zunächst wird das Textil 14 auf der mit dem Kunststoff durchsetzten Naturfasermatte 12 angeordnet. Anschließend wird das Textil 14 gemeinsam mit der Naturfasermatte 12 in einer ersten Presse 32 angeordnet, bei der es sich insbesondere um eine Kontaktheizpresse handeln kann. In der ersten Presse 32 werden das Textil 14 und die mit dem Kunststoff durchsetzte Naturfasermatte 12 gemeinsam zu einem Verbund 22 verdichtet. Vorher und/oder währenddessen wird der Kunststoff, der die Naturfasermatte 12 durchsetzt, mittels der ersten Presse 32 aufgeschmolzen.

Während des Verdichtungsvorgangs zu dem Verbund 22 wird dadurch das Textil 14 teilweise in den aufgeschmolzenen Kunststoff, der die Naturfasermatte 12 durchsetzt, hineingedrückt. Noch vor dem Herstellen des Verbunds 22, also noch vor dem Einlegen in die erste Presse 32, kann das Textil 14 beispielsweise mit der Naturfasermatte 12 vernäht und/oder verklebt werden. Nach der Herstellung des Verbunds 22 wird dieser aus der ersten Presse 32 entnommen und in der zweiten Presse 26 angeordnet. Auf dem Textil 14 wird wiederum die Folie 16 angeordnet und gemeinsam mit dem Verbund 22 mittels der zweiten Presse 26 aufgeheizt und zu einem Bauteilverbund 28 verdichtet. Bei der Herstellung des Bauteilverbunds 28 wird dieser wiederum auf eine Dicke verdichtet, welche größer als die Zieldicke des herzustellen Verkleidungsbauteils 10 ist. Der Bauteilverbund 28 wird aus der zweiten Presse 26 entnommen und dem Werkzeug 30 zugeführt, mittels welchem durch Umformen und Verdichten des Bauteilverbunds 28 wiederum das Verkleidungsbauteil 10 hergestellt wird. Mittels des Werkzeugs 30 kann wiederum auf der Sichtseite 18 der Folie 16 eine Oberflächenstruktur eingeprägt werden.

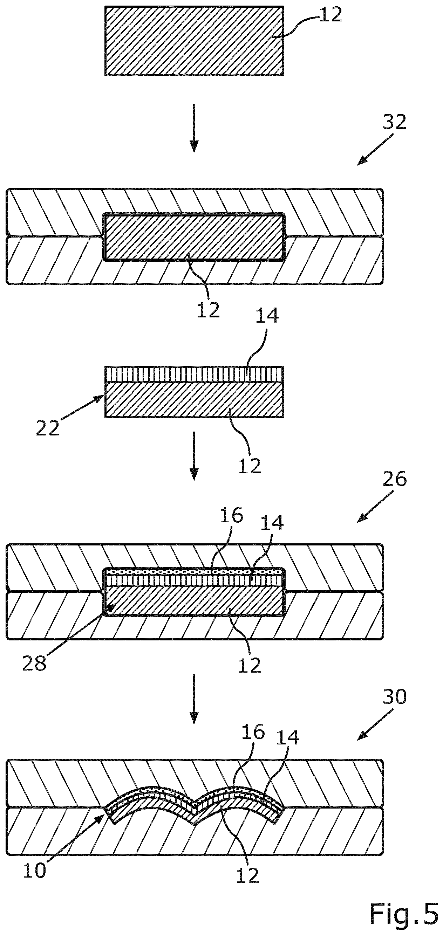

In Fig. 5 ist eine dritte Verfahrensvariante zum Herstellen des naturfaserverstärkten Verkleidungsbauteils 10 schematisch dargestellt. Bei dieser Verfahrensvariante wird noch vor dem Anordnen des Textils 14 auf der Naturfasermatte 12 diese allein mittels der ersten Presse 32 aufgeheizt und verdichtet. Dadurch wird der Kunststoff, der die Naturfasermatte 12 durchsetzt, aufgeschmolzen. Die verdichtete und verpresste Naturfasermatte 12 wird aus der ersten Presse 32 entnommen. Danach wird das Textil 14 in den noch zumindest teilweise geschmolzenen Kunststoff, der die verdichtete Naturfasermatte 12 durchsetzt, unter Ausbildung eines Verbunds 22 gedrückt. Erst danach wird der so hergestellte Verbund 22 in der zweiten Presse 26 angeordnet. Die Folie 16 wird auf dem Textil 14 des Verbunds 22 angeordnet und gemeinsam mit diesem mittels der zweiten Presse 26 aufgeheizt und zu einem Bauteilverbund 28 verdichtet. Danach wird der Bauteilverbund 28 wiederum entnommen und im Werkzeug 30 positioniert, mittels welchem in der bereits beschriebenen Weise der Bauteilverbund 28 umgeformt und verdichtet wird, sodass das Verkleidungsbauteil 10 hergestellt wird. Mittels des Werkzeugs 30 kann wiederum auf der Sichtseite 18 der Folie 16 eine Oberflächenstruktur eingeprägt werden.

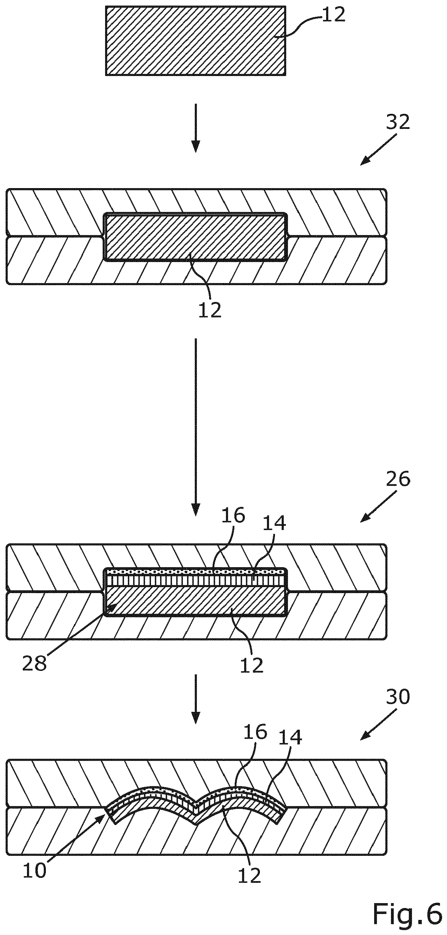

In Fig. 6 ist eine weitere mögliche Verfahrensvariante schematisch dargestellt, gemäß welcher das naturfaserverstärkte Verkleidungsbauteil 10 hergestellt werden kann. Bei dieser Verfahrensvariante wird - wie bei der zuvor beschriebenen Verfahrensvariante - die mit dem Kunststoff durchsetzte Naturfasermatte 12 allein mittels der ersten Presse 32 aufgeheizt und verdichtet. Der Kunststoff, der die Naturfasermatte 12 durchsetzt, wird dabei aufgeschmolzen. Die noch aufgeheizte Naturfasermatte 12 wird aus der ersten Presse 32 entnommen und in der zweiten Presse 26 angeordnet. Das Textil 14 und die Folie 16 werden vor dem Anordnen in der zweiten Presse 26 zu einem miteinander verbundenen Halbzeug verbunden, welches auf der aufgeheizten und verdichteten Naturfasermatte 12 angeordnet und gemeinsam mit dieser mittels der zweiten Presse 26 aufgeheizt und zu einem Bauteilverbund 28 verdichtet wird. Der Bauteilverbund 28 wird dabei wiederum auf eine Dicke verdichtet, welche größer als die Zieldicke des herzustellenden Verkleidungsbauteils 10 ist. Der Bauteilverbund 28 wird aus der zweiten Presse 26 entnommen und im Werkzeug 30 angeordnet, mittels welchem in der bereits beschriebenen Weise der Bauteilverbund 28 umgeformt und verdichtet wird, sodass das Verkleidungsbauteil 10 hergestellt wird. Wiederum kann mittels des Werkzeugs 30 auf der Sichtseite 18 der Folie 16 eine Oberflächenstruktur eingeprägt werden.

Insbesondere bei den in den Fig. 4 bis 6 beschriebenen Verfahrensvarianten ist es möglich, mittels der ersten Presse 32 unterschiedliche Faserverteilungen, Materialverteilungen bzw. Materialanhäufungen bei der Naturfasermatte 12 auszugleichen. Dafür kann die erste Presse 32 über jeweilige Stellmittel verstellbare Werkzeugsegmente aufweisen, mittels welchen beim Verdichten von Bereichen unterschiedlicher Faserdichten bei der Naturfasermatte 12 unterschiedliche Pressstellungen angefahren werden können. Durch diese separat voneinander verstellbaren Werkzeugsegmente ist es möglich, unterschiedliche Faserdichten bei der Naturfasermatte 12 auszugleichen. Die erste Presse 32 kann sich also aus unterschiedlichen Werkzeugsegmenten zusammensetzen, die beispielsweise über jeweilige als Stellmittel dienende Druckzylinder verfahrbar sind. Diese Druckzylinder können über verschiedene Sensoren miteinander kommunizieren, sodass die als Kontaktheizpresse ausgebildete erste Presse 32 unterschiedliche Pressstellungen anfahren kann, um unterschiedliche Bereiche mit unterschiedlicher Faserdichte bei der Naturfasermatte 12 auszugleichen. Mittels der Sensoren kann beispielsweise erfasst werden, wie viel Druck bzw. Kraft mittels der jeweiligen Werkzeugsegmente und/oder der Stellmittel aufgebracht wird. Die Stellmittel können dann druckgesteuert werden, sodass mittels diesen z.B. die gleiche Kraft aufgebracht wird. Auch wäre es möglich, dass mittels der Sensoren jeweils erfasst wird, wie weit die Werkzeugsegmente und/oder Stellmittel bewegt wurden, wobei die Ansteuerung der Stellelemente weggesteuert erfolgen kann, z.B. sodass mittels der Stellelemente bzw. mittels der Werkzeugsegmente jeweils der gleiche Weg zurückgelegt wird.

Das Verdichten mittels der ersten Presse 32 kann insbesondere bei den in den Fig. 4 bis 6 beschriebenen Verfahrensvarianten gemäß einer vorgegebenen Kraftrampe, beispielsweise mit 0,5 Tonnen pro Sekunde, erfolgen. Vor dem Verdichten der Naturfasermatte 12 mittels der ersten Presse 32 kann diese 40 bis 90 Sekunden lang bei 190 bis 230 °C aufgeheizt werden. Eine langsame Verpressung ermöglicht, das insbesondere in der Naturfasermatte 12 gebundene Wasser freiwerden zu lassen, sodass dieses gasförmig entweichen kann. Durch eine langsame Verdichtung der Naturfasermatte 12 kann insbesondere auch das Wasser im Innersten der Naturfasermatte 12 entweichen und verbleibt nicht als Kondensat im späteren Verkleidungsbauteil 10.

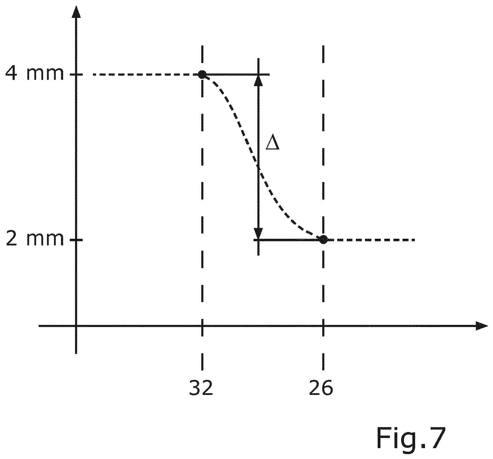

In Fig. 7 ist ein Diagramm gezeigt, in dem schematisch jeweilige Spalte der Pressen 32, 26 dargestellt sind, die bei den Pressen 32, 26 nach dem Schließen der Pressen 32, 26 verbleiben. Die beiden Pressen 32, 26 werden beim Verdichten so weit geschlossen, dass ein nach dem Verdichten verbleibender Spalt zwischen jeweiligen Werkzeughälften bei der ersten Presse 32 ca. 1,3 bis 2 mal größer ist als ein nach dem Verdichten verbleibender Spalt zwischen den jeweiligen Werkzeughälften der zweiten Presse 26. Im hier konkret dargestellten Fall ist ein verbleibender Spalt bei der ersten Presse 32 nach dem Verdichten vier Millimeter groß und bei der zweiten Presse 26 zwei Millimeter groß. Diese Zahlenangaben sind aber rein beispielhaft zu verstehen.

Bei sämtlichen Verfahrensvarianten ist es wichtig, dass das Textil 14 nicht zu sehr in den aufgeschmolzenen Kunststoff, welcher die Naturfasermatte 12 durchsetzt, hineingedrückt wird. Denn bei dem jeweiligen Bauteilverbund 28 soll sich an der vom Textil 14 abgewandten Sichtseite 18 der Folie 16 die Oberflächenstruktur des Textils 14 abzeichnen.

Der Unterschied der in Fig. 7 gezeigten Spaltmaße bei den jeweils geschlossenen Pressen 32, 26 kann maßgeblich eine Zieloptik beim fertighergestellten Verkleidungsbauteil 10 beeinflussen. Ist der Unterschied hinsichtlich des Spaltmaßes zwischen der ersten und der zweiten Presse 32, 26 zu groß, dann könnte dies dazu führen, dass die Folie 16 weiter als gewünscht einsinkt und das fertige Verkleidungsbauteil 10 heller aussieht als gewünscht. Ist hingegen der Unterschied hinsichtlich der Spaltmaße bei den geschlossenen Pressen 32, 26 zu gering, kann dies dazu führen, dass die Folie 16 nicht weit genug in die Naturfasermatte 12 eingedrückt wird. Der aufgebrachte Druck mittels der als Laminierpresse dienenden zweiten Presse 26 ist wenig entscheidend für die Optik des Verkleidungsbauteils 10. Mittels der zweiten Presse 26 kann beispielsweise mit 25 Tonnen pro Sekunde verdichtet werden, also wesentlich schneller als mittels der ersten Presse 32. Ein besonders gutes Ergebnis hinsichtlich der Haptik und Optik des Verkleidungsbauteils 10 kann erzielt werden, wenn die Naturfasermatte 12 beim Herstellen des Verkleidungsbauteils 10 auf eine Dichte von ca. 0,7 bis 1 g/m³ verdichtet wird. Insgesamt wird durch alle beschriebene Verfahrensvarianten jeweils eine gute Möglichkeit geboten, das naturfaserverstärkte Verkleidungsbauteil 10 großserientauglich herzustellen.

### BEZUGSZEICHENLISTE

- 10: Verkleidungsbauteil
- 12: mit Kunststoff durchsetzte Naturfasermatte
- 14: Textil
- 16: Folie
- 18: Sichtseite der Folie
- 20: Walzen
- 22: aus dem Textil und der Naturfasermatte gebildeter Verbund
- 24: Kontaktheizung
- 26: zweite Presse
- 28: Bauteilverbund
- 30: Werkzeug
- 32: erste Presse

## Patentansprüche

1. Verfahren zum Herstellen eines naturfaserverstärkten Verkleidungsbauteils (10) für ein Kraftfahrzeug, umfassend die Schritte:
- Bereitstellen einer mit einem Kunststoff durchsetzten Naturfasermatte (12);
- Bereitstellen eines Textils (14) in Form eines flexiblen Flächengebildes;
- Bereitstellen einer mehrlagigen Folie (16);
- Verdichten der Naturfasermatte (12), des Textils (14) und der Folie (16) zu einem Bauteilverbund (28) mittels einer ersten Presse (32) und/oder mittels einer zweiten Presse (26), wobei das Textil (14) mit der als Trägerteil dienenden Naturfasermatte (12) verbunden und an einer von der Naturfasermatte (12) abgewandten Seite des Textils (14) die Folie (16) derart verbunden wird, dass sich an einer vom Textil (14) abgewandten Sichtseite (18) der Folie (16) eine Oberflächenstruktur des Textils (14) abzeichnet;
- Umformen und Verdichten des Bauteilverbunds (28) mittels eines Werkzeugs (30) in eine vorgegebene Form unter Ausbildung des Verkleidungsbauteils (10).

2. Verfahren nach Anspruch 1,
**dadurch gekennzeichnet, dass**
mittels des Werkzeugs (30) auf der Sichtseite (18) der Folie (16), welche einer Sichtseite des Verkleidungsbauteils (10) entspricht, eine Oberflächenstruktur eingeprägt wird.

3. Verfahren nach Anspruch 1 oder 2,
**dadurch gekennzeichnet, dass**
- aus der Naturfasermatte (12) und dem Textil (14) ein Verbund (22) in Form eines Organoblechs hergestellt wird,
- das hergestellte Organoblech aufgeheizt wird, insbesondere 30 bis 40 Sekunden lang bei 190 bis 230 °C;
- die Folie (16) auf dem Textil (14) des aufgeheizten Organoblechs angeordnet und gemeinsam mit diesem erwärmt und mittels der zweiten Presse (26) zu dem Bauteilverbund (28) verdichtet wird.

4. Verfahren nach Anspruch 3,
**dadurch gekennzeichnet, dass**
vor dem Verbinden des Textils (14) mit der Naturfasermatte (12) diese durch Warmwalzen verdichtet wird, wonach das Textil (14) teilweise in den durch das Warmwalzen zumindest teilweise noch geschmolzenen Kunststoff der Naturfasermatte (12) eingedrückt wird, infolgedessen sich der Kunststoff in Lücken des Textils (14) drückt und im Textil (14) verankert und dadurch das Textil (14) unter Ausbildung des Organoblechs mit der Naturfasermatte (12) verbunden wird.

5. Verfahren nach Anspruch 4,
**dadurch gekennzeichnet, dass**
das Textil (14) bezogen auf seine Dicke maximal zu 70 Prozent, insbesondere maximal zu 30 bis 50 Prozent, in den noch geschmolzenen Kunststoff der Naturfasermatte (12) eingedrückt wird.

6. Verfahren nach Anspruch 4 oder 5,
**dadurch gekennzeichnet, dass**
vor dem Eindrücken des Textils (14) zwischen diesem und der Naturfasermatte (12) ein Haftvermittler angeordnet wird.

7. Verfahren nach einem der Ansprüche 2 bis 6,
**dadurch gekennzeichnet, dass**
das Organoblech mittels eines Greifersystems geklemmt wird.

8. Verfahren nach Anspruch 1 oder 2,
**dadurch gekennzeichnet, dass**
- das Textil (14) auf der Naturfasermatte (12) angeordnet und gemeinsam mit dieser aufgeheizt und mittels der ersten Presse (32) zu einem Verbund (22) verdichtet wird;
- die Folie (16) auf dem Textil (14) des Verbunds (22) angeordnet und gemeinsam mit diesem aufgeheizt und mittels der zweiten Presse (26) zu dem Bauteilverbund (28) verdichtet wird.

9. Verfahren nach Anspruch 8,
**dadurch gekennzeichnet, dass**
vor dem Herstellen des Verbunds (22) das Textil (14) mit der Naturfasermatte (12) vernäht und/oder verklebt wird.

10. Verfahren nach Anspruch 1 oder 2,
**dadurch gekennzeichnet, dass**
- vor dem Anordnen des Textils (14) auf der Naturfasermatte (12) diese allein aufgeheizt und mittels der ersten Presse (32) verdichtet wird;
- das Textil (14) in den noch zumindest teilweise geschmolzenen Kunststoff der verdichteten Naturfasermatte (12) unter Ausbildung eines Verbunds (22) gedrückt wird;
- die Folie (16) auf dem Textil (14) des Verbunds (22) angeordnet und gemeinsam mit diesem aufgeheizt und mittels der zweiten Presse (26) zu dem Bauteilverbund (28) verdichtet wird.

11. Verfahren nach Anspruch 1 oder 2,
**dadurch gekennzeichnet, dass**
- die Naturfasermatte (12) allein aufgeheizt und mittels der ersten Presse (32) verdichtet wird;
- das Textil (14) und die Folie (16) zu einem miteinander verbundenen Halbzeug verbunden werden, welches auf der verdichteten Naturfasermatte (12) angeordnet und gemeinsam mit dieser aufgeheizt und mittels der zweiten Presse (26) zu dem Bauteilverbund (28) verdichtet wird.

12. Verfahren nach einem der Ansprüche 8 bis 11,
**dadurch gekennzeichnet, dass**
die erste Presse (32) mehrere über jeweilige Stellmittel verstellbare Werkzeugsegmente aufweist, mittels welchen beim Verdichten Bereiche unterschiedlicher Faserdichte bei der Naturfasermatte (12) durch Anfahren unterschiedlicher Pressstellungen durch die Werkzeugsegmente ausgeglichen werden.

13. Verfahren nach einem der Ansprüche 8 bis 12,
**dadurch gekennzeichnet, dass**
das Verdichten mittels der ersten Presse (32) gemäß einer vorgegebenen Kraftrampe, insbesondere mit 0,5 Tonnen pro Sekunde, erfolgt.

14. Verfahren nach einem der Ansprüche 8 bis 13,
**dadurch gekennzeichnet, dass**
vor dem Verdichten der Naturfasermatte (12) diese mittels der ersten Presse (32) 40 bis 90 Sekunden lang bei 190 bis 230 °C aufgeheizt wird.

15. Verfahren nach einem der Ansprüche 3 bis 14,
**dadurch gekennzeichnet, dass**
der Verbund (22) gemeinsam mit der an diesem angeordneten Folie (16) mittels der zweiten Presse (26) aufgeheizt und zu dem Bauteilverbund (28) verdichtet wird.

16. Verfahren nach Anspruch 15,
**dadurch gekennzeichnet, dass**
der Verbund (22) gemeinsam mit der an diesem angeordneten Folie (16) 20 bis 35 Sekunden lang bei 200 bis 220 °C aufgeheizt wird, insbesondere vor dem Verdichten zum Bauteilverbund (28) mittels der zweiten Presse (26).

17. Verfahren nach einem der vorhergehenden Ansprüche,
**dadurch gekennzeichnet, dass**
das Verdichten zum Bauteilverbund (28) mittels der zweiten Presse (32) gemäß einer vorgegebenen Kraftrampe, insbesondere mit 25 Tonnen pro Sekunde, erfolgt.

18. Verfahren nach einem der Ansprüche 8 bis 17,
**dadurch gekennzeichnet, dass**
die beiden Pressen (32, 26) beim Verdichten so weit geschlossen werden, dass ein nach dem Verdichten verbleibender Spalt zwischen jeweiligen Werkzeughälften bei der ersten Presse (32) 1,3 bis 2 mal größer als ein nach dem Verdichten verbleibender Spalt zwischen jeweiligen Werkzeughälften bei der zweiten Presse (26) ist.

19. Verfahren nach einem der vorhergehenden Ansprüche,
**dadurch gekennzeichnet, dass**
bei der Herstellung des Bauteilverbunds (18) dieser auf eine Dicke verdichtet wird, welche größer als eine Zieldicke des Verkleidungsbauteils (10) ist.

20. Verfahren nach einem der vorhergehenden Ansprüche,
**dadurch gekennzeichnet, dass**
die Naturfasermatte (12) beim Herstellen des Verkleidungsbauteils (10) auf eine Dichte von 0,7 bis 1 g/m³ verdichtet wird.

21. Verfahren nach einem der vorhergehenden Ansprüche,
**dadurch gekennzeichnet, dass**
das zum Umformen und Verdichten des Bauteilverbunds (28) verwendete Werkzeug (30) wenigstens teilweise aus einem Material hergestellt wird, welches ab einer vorgegebenen Dichte des Bauteilverbunds (28) nachgiebiger als der Bauteilverbund (28) ist.

22. Verfahren nach einem der vorhergehenden Ansprüche,
**dadurch gekennzeichnet, dass**
beim zum Umformen und Verdichten des Bauteilverbunds (28) verwendeten Werkzeug (30) eine Werkzeugoberflächenstruktur durch Sandstrahlen oder Ätzen und/oder anschließendem Oberflächenhärten hergestellt wird, welche der einzuprägenden Oberflächenstruktur des Verkleidungsbauteils (10) entspricht.

23. Verfahren nach einem der vorhergehenden Ansprüche,
**dadurch gekennzeichnet, dass**
das Werkzeug (30), mittels welchem der Bauteilverbund (28) zum Verkleidungsbauteil (10) umgeformt und verdichtet wird, auf eine Temperatur zwischen 20 und 80 °C temperiert wird.

## Claims

1. Method for producing a natural-fibre-reinforced cladding component (10) for a motor vehicle, comprising the following steps:
- providing a natural-fibre mat (12) permeated with a plastic;
- providing a textile (14) in the form of a flexible sheet material;
- providing a multi-layered film (16);
- compacting the natural-fibre mat (12), the textile (14) and the film (16) by means of a first press (32) and/or by means of a second press (26) to form a component composite (28), wherein the textile (14) is connected to the natural-fibre mat (12) serving as carrier part and the film (16) is connected on a side of the textile (14) that faces away from the natural-fibre mat (12) in such a way that a surface structure of the textile (14) becomes apparent on a visible side (18) of the film (16) that faces away from the textile (14);
- shaping and compacting the component composite (28) into a predefined shape by means of a tool (30) to form the cladding component (10).

2. Method according to Claim 1,
**characterized in that**
a surface structure is embossed onto the visible side (18) of the film (16), which corresponds to a visible side of the cladding component (10), by means of the tool (30) .

3. Method according to Claim 1 or 2,
**characterized in that**
- a composite (22) in the form of an organometallic sheet is produced from the natural-fibre mat (12) and the textile (14),
- the organometallic sheet produced is heated, in particular for 30 to 40 seconds at 190 to 230°C;
- the film (16) is arranged on the textile (14) of the heated organometallic sheet and together therewith is heated and, by means of the second press (26), is compacted to form the component composite (28).

4. Method according to Claim 3,
**characterized in that**,
before connecting the textile (14) to the natural-fibre mat (12), said mat is compacted by hot rolling, after which the textile (14) is partially pressed into the plastic, which is at least partially still molten owing to the hot rolling, of the natural-fibre mat (12), as a result of which the plastic is pressed into gaps in the textile (14) and is anchored in the textile (14), and as a result the textile (14) is connected to the natural-fibre mat (12) to form the organometallic sheet.

5. Method according to Claim 4,
**characterized in that**
the textile (14) is pressed into the still molten plastic of the natural-fibre mat (12) to a maximum textile thickness of 70 percent, in particular a maximum textile thickness of 30 to 50 percent.

6. Method according to Claim 4 or 5,
**characterized in that**,
before the textile (14) is pressed in, an adhesion promoter is arranged between said textile and the natural-fibre mat (12).

7. Method according to one of Claims 2 to 6,
**characterized in that**
the organometallic sheet is clamped by means of a gripper system.

8. Method according to Claim 1 or 2,
**characterized in that**
- the textile (14) is arranged on the natural-fibre mat (12) and together therewith is heated and, by means of the first press (32), is compacted to form a composite (22),
- the film (16) is arranged on the textile (14) of the composite (22) and together therewith is heated and, by means of the second press (26), is compacted to form the component composite (28).

9. Method according to Claim 8,
**characterized in that**,
before the production of the composite (22), the textile (14) is sewed and/or adhesively bonded to the natural-fibre mat (12).

10. Method according to Claim 1 or 2,
**characterized in that**,
- before arranging the textile (14) on the natural-fibre mat (12), said mat on its own is heated and, by means of the first press (32), is compacted;
- the textile (14) is pressed into the still at least partially molten plastic of the compacted natural-fibre mat (12) to form a composite (22);
- the film (16) is arranged on the textile (14) of the composite (22) and together therewith is heated and, by means of the second press (26), is compacted to form the component composite (28).

11. Method according to Claim 1 or 2,
**characterized in that**
- the natural-fibre mat (12) on its own is heated and, by means of the first press (32), is compacted;
- the textile (14) and the film (16) are connected to form an interconnected semifinished product, which is arranged on the compacted natural-fibre mat (12) and together therewith is heated and, by means of the second press (26), is compacted to form the component composite (28) .

12. Method according to one of Claims 8 to 11,
**characterized in that**
the first press (32) has multiple tool segments which are adjustable via respective adjusting means and by means of which, during the compaction, regions of differing fibre densities in the natural-fibre mat (12) are compensated by having the tool segments move up to different pressing locations.

13. Method according to one of Claims 8 to 12,
**characterized in that**
the compaction is effected by means of the first press (32) in accordance with a predefined force ramp, in particular at 0.5 tonnes per second.

14. Method according to one of Claims 8 to 13,
**characterized in that**,
before the compaction of the natural-fibre mat (12), it is heated for 40 to 90 seconds at 190 to 230°C by means of the first press (32).

15. Method according to one of Claims 3 to 14,
**characterized in that**
the composite (22), together with the film (16) arranged thereon, is heated and compacted to form the component composite (28) by means of the second press (26).

16. Method according to Claim 15,
**characterized in that**
the composite (22), together with the film (16) arranged thereon, is heated for 20 to 35 seconds at 200 to 220°C, in particular before it is compacted by means of the second press (26) to form the component composite (28).

17. Method according to one of the preceding claims,
**characterized in that**
the compaction by means of the second press (32) to form the component composite (28) is effected in accordance with a predefined force ramp, in particular at 25 tonnes per second.

18. Method according to one of Claims 8 to 17,
**characterized in that**
the two presses (32, 26) are closed during the compaction to such an extent that a gap remaining after the compaction between respective tool halves in the first press (32) is 1.3 to 2 times larger than a gap remaining after the compaction between respective tool halves in the second press (26).

19. Method according to one of the preceding claims,
**characterized in that**,
when the component composite (18) is being produced, it is compacted to a thickness which is greater than a target thickness of the cladding component (10).

20. Method according to one of the preceding claims,
**characterized in that**
the natural-fibre mat (12) is compacted to a density of 0.7 to 1 g/m³ when the cladding component (10) is being produced.

21. Method according to one of the preceding claims,
**characterized in that**
the tool (30) used to shape and compact the component composite (28) is produced at least partially from a material which is more flexible than the component composite (28) above a predefined density of the component composite (28).

22. Method according to one of the preceding claims,
**characterized in that**,
in the case of the tool (30) used to shape and compact the component composite (28), a tool surface structure which corresponds to the surface structure to be embossed of the cladding component (10) is produced by sand blasting or etching and/or subsequent surface hardening.

23. Method according to one of the preceding claims,
**characterized in that**
the tool (30), by means of which the component composite (28) is shaped and compacted to form the cladding component (10), is temperature-controlled to a temperature of between 20 and 80°C.

## Revendications

1. Procédé de fabrication d'un composant de revêtement (10) renforcé par des fibres naturelles pour un véhicule automobile, comprenant les étapes suivantes :
- la fourniture d'un mat de fibres naturelles (12) imprégné d'une matière plastique ;
- la fourniture d'un textile (14) sous la forme d'une structure plate flexible ;
- la fourniture d'un film multicouche (16) ;
- le compactage du mat de fibres naturelles (12), du textile (14) et du film (16) en un composite de composant (28) au moyen d'une première presse (32) et/ou au moyen d'une deuxième presse (26), le textile (14) étant relié au mat de fibres naturelles (12) servant de partie de support et, sur un côté du textile (14) détourné du mat de fibres naturelles (12), le film (16) étant relié de telle sorte qu'une structure de surface du textile (14) se dessine sur un côté visible (18) du film (16) détourné du textile (14) ;
- le formage et le compactage du composite de composant (28) au moyen d'un outil (30) en une forme prédéfinie pour réaliser le composant de revêtement (10).

2. Procédé selon la revendication 1,
**caractérisé en ce que**
une structure de surface est gaufrée au moyen de l'outil (30) sur le côté visible (18) du film (16), qui correspond à un côté visible du composant de revêtement (10).

3. Procédé selon la revendication 1 ou 2,
**caractérisé en ce que**
- un composite (22) sous la forme d'une tôle organique est produit à partir du mat de fibres naturelles (12) et du textile (14),
- la tôle organique produite est chauffée, notamment pendant 30 à 40 secondes à une température de 190 à 230 °C ;
- le film (16) est agencé sur le textile (14) de la tôle organique chauffée et est chauffé conjointement avec celle-ci et compacté au moyen de la deuxième presse (26) en le composite de composant (28).

4. Procédé selon la revendication 3,
**caractérisé en ce que**
avant la liaison du textile (14) au mat de fibres naturelles (12), celui-ci est compacté par laminage à chaud, après quoi le textile (14) est partiellement enfoncé dans la matière plastique du mat de fibres naturelles (12), au moins partiellement encore fondue par le laminage à chaud, la matière plastique se pressant par conséquent dans des interstices du textile (14) et s'ancrant dans le textile (14) et le textile (14) étant ainsi lié au mat de fibres naturelles (12) en réalisant la tôle organique.

5. Procédé selon la revendication 4,
**caractérisé en ce que**
le textile (14) est enfoncé au maximum à 70 pour cent, notamment au maximum à 30 à 50 pour cent, par rapport à son épaisseur, dans la matière plastique encore fondue du mat de fibres naturelles (12).

6. Procédé selon la revendication 4 ou 5,
**caractérisé en ce que**
avant l'enfoncement du textile (14), un promoteur d'adhésion est agencé entre celui-ci et le mat de fibres naturelles (12).

7. Procédé selon l'une quelconque des revendications 2 à 6,
**caractérisé en ce que**
la tôle organique est serrée au moyen d'un système de préhension.

8. Procédé selon la revendication 1 ou 2,
**caractérisé en ce que**
- le textile (14) est agencé sur le mat de fibres naturelles (12) et chauffé conjointement avec celui-ci et compacté en un composite (22) au moyen de la première presse (32) ;
- le film (16) est agencé sur le textile (14) du composite (22) et chauffé conjointement avec celui-ci et compacté en le composite de composant (28) au moyen de la deuxième presse (26).

9. Procédé selon la revendication 8,
**caractérisé en ce que**
avant la fabrication du composite (22), le textile (14) est cousu et/ou collé au mat de fibres naturelles (12).

10. Procédé selon la revendication 1 ou 2,
**caractérisé en ce que**
- avant l'agencement du textile (14) sur le mat de fibres naturelles (12), celui-ci est chauffé seul et compacté au moyen de la première presse (32) ;
- le textile (14) est enfoncé dans la matière plastique encore au moins partiellement fondue du mat de fibres naturelles compacté (12) en réalisant un composite (22) ;
- le film (16) est agencé sur le textile (14) du composite (22) et chauffé conjointement avec celui-ci et compacté au moyen de la deuxième presse (26) en le composite de composant (28).

11. Procédé selon la revendication 1 ou 2,
**caractérisé en ce que**
- le mat de fibres naturelles (12) est chauffé seul et compacté au moyen de la première presse (32) ;
- le textile (14) et le film (16) sont liés en un produit semi-fini lié entre eux, qui est agencé sur le mat de fibres naturelles compacté (12) et chauffé conjointement avec celui-ci et compacté au moyen de la deuxième presse (26) en le composite de composant (28).

12. Procédé selon l'une quelconque des revendications 8 à 11,
**caractérisé en ce que**
la première presse (32) présente plusieurs segments d'outil réglables par l'intermédiaire de moyens de réglage respectifs, au moyen desquels, lors du compactage, des zones de densité de fibres différente dans le mat de fibres naturelles (12) sont compensées par l'atteinte de différentes positions de pressage par les segments d'outil.

13. Procédé selon l'une quelconque des revendications 8 à 12,
**caractérisé en ce que**
le compactage au moyen de la première presse (32) s'effectue selon une rampe de force prédéfinie, notamment à 0,5 tonne par seconde.

14. Procédé selon l'une quelconque des revendications 8 à 13,
**caractérisé en ce que**
avant le compactage du mat de fibres naturelles (12), celui-ci est chauffé au moyen de la première presse (32) pendant 40 à 90 secondes à une température de 190 à 230 °C.

15. Procédé selon l'une quelconque des revendications 3 à 14,
**caractérisé en ce que**
le composite (22) est chauffé conjointement avec le film (16) agencé sur celui-ci au moyen de la deuxième presse (26) et compacté en le composite de composant (28).

16. Procédé selon la revendication 15,
**caractérisé en ce que**
le composite (22) est chauffé conjointement avec le film (16) agencé sur celui-ci pendant 20 à 35 secondes à une température de 200 à 220 °C, notamment avant le compactage en le composite de composant (28) au moyen de la deuxième presse (26).

17. Procédé selon l'une quelconque des revendications précédentes,
**caractérisé en ce que**
le compactage en le composite de composant (28) au moyen de la deuxième presse (32) s'effectue selon une rampe de force prédéfinie, notamment à 25 tonnes par seconde.

18. Procédé selon l'une quelconque des revendications 8 à 17,
**caractérisé en ce que**
les deux presses (32, 26) sont fermées lors du compactage dans une mesure telle qu'un espace restant après le compactage entre les moitiés d'outil respectives dans la première presse (32) est 1,3 à 2 fois plus grand qu'un espace restant après le compactage entre les moitiés d'outil respectives dans la deuxième presse (26).

19. Procédé selon l'une quelconque des revendications précédentes,
**caractérisé en ce que**
lors de la fabrication du composite de composant (18), celui-ci est compacté à une épaisseur qui est supérieure à une épaisseur cible du composant de revêtement (10).

20. Procédé selon l'une quelconque des revendications précédentes,
**caractérisé en ce que**
le mat de fibres naturelles (12) est compacté à une densité de 0,7 à 1 g/m³ lors de la fabrication du composant de revêtement (10).

21. Procédé selon l'une quelconque des revendications précédentes,
**caractérisé en ce que**
l'outil (30) utilisé pour le formage et le compactage du composite de composant (28) est fabriqué au moins partiellement en un matériau qui, à partir d'une densité prédéfinie du composite de composant (28), est plus souple que le composite de composant (28).

22. Procédé selon l'une quelconque des revendications précédentes,
**caractérisé en ce que**
dans l'outil (30) utilisé pour le formage et le compactage du composite de composant (28), une structure de surface d'outil est produite par sablage ou gravure et/ou durcissement de surface subséquent, qui correspond à la structure de surface à gaufrer du composant de revêtement (10).

23. Procédé selon l'une quelconque des revendications précédentes
**caractérisé en ce que**
l'outil (30), au moyen duquel le composite de composant (28) est formé et compacté en le composant de revêtement (10), est régulé en température à une température comprise entre 20 et 80 °C.
